# EUROPÄISCHE PATENTSCHRIFT

(11) **EP 3 976 416 B1**
(45) Veröffentlichungstag und Bekanntmachung des Hinweises auf die Patenterteilung: **14.10.2026**
(21) Anmeldenummer: 20728910.9
(22) Anmeldetag: 22.05.2020
(51) Int. Cl.: B60L 3/00, B60L 3/04, B60L 58/21

(54) **BATTERIEVORRICHTUNG FÜR EIN FAHRZEUG**
BATTERY DEVICE FOR A VEHICLE
DISPOSITIF DE BATTERIE POUR UN VÉHICULE

(30) Priorität: 24.05.2019 DE 102019113917
(43) Veröffentlichungstag der Anmeldung: 06.04.2022
(73) Patentinhaber: AVL List GmbH, 8020 Graz (AT); Daimler Truck AG, 70771 Leinfelden-Echterdingen (DE)
(72) Erfinder: POLIC, Ales, 2230 Lenart (SI); LUTTENBERGER, Fabian, 8010 Graz (AT); REITER, Michael Rudolf, 8461 Ehrenhausen an der Weinstrasse (AT); BEICHTBUCHNER, Albert, 8642 St. Lorenzen im Mürztal (AT); SHIMONAGATA, Takeshi, Kawasaki, Kanagawa 211--8522 (JP); MENON, Vikram, Kawasaki, Kanagawa 211--8522 (JP); UHL, Markus, Kawasaki, Kanagawa 211--8522 (JP)
(74) Vertreter: Mathys & Squire
(86) Internationale Anmeldenummer: PCT/AT2020/060208
(87) Internationale Veröffentlichungsnummer: WO 2020/237270

(56) Entgegenhaltungen:
- WO-A1-2019/025168
- US-A1- 2013 088 201
- US-A1- 2015 364 940
- US-A1- 2017 005 371
- US-A1- 2017 120 770

## Beschreibung

Die vorliegende Erfindung betrifft eine Batterievorrichtung für ein Fahrzeug sowie ein Verfahren für die Kontrolle einer solchen Batterievorrichtung.

Es ist bekannt, dass Fahrzeuge mit Batterievorrichtungen ausgestattet sind, um insbesondere den Antrieb des Fahrzeugs zu gewährleisten oder unterstützen zu können. Solche Fahrzeuge sind auch als elektrische Fahrzeuge oder als Hybridfahrzeuge bekannt. Die vorliegende Erfindung bezieht sich insbesondere auf rein elektrisch angetriebene Fahrzeuge, bei welchen die Batterievorrichtung die alleinige Speichermöglichkeit für Antriebsenergie darstellt.

Bei bekannten Batterievorrichtungen besteht ein grundsätzlicher Nachteil bei einem Defekt innerhalb der Batterievorrichtung. Bekannte Batterievorrichtungen sind üblicherweise aus einer Vielzahl einzelner Batterieeinheiten zusammengesetzt. Jede dieser Batterieeinheiten weist üblicherweise in Ebenen geschichtet einzelne Batteriemodule auf. Diese Batteriemodule sind wiederum jeweils mit einer bestimmten definierten Anzahl von Batteriezellen bestückt, welche die kleinste Energiespeichereinheit der Batterievorrichtung darstellt. Aufgrund der Verschaltung innerhalb der Batterieeinheit und damit innerhalb der Batterievorrichtung führt jedoch ein Defekt einer einzelnen Batteriezelle und/oder eines einzelnen Batteriemoduls zum kompletten Defekt der gesamten Batterievorrichtung. Somit besteht eine Vielzahl von Defektmöglichkeiten, welche zu einem elektrischen Gesamtdefekt der Batterievorrichtung führen kann. Ein elektrisches Fahrzeug, welches auf die elektrische Energie innerhalb der Batterievorrichtung ausschließlich angewiesen ist, um eine Fortbewegung über einen Elektromotor zur Verfügung stellen zu können, weist damit eine Vielzahl von Defektrisiken auf. Der Defekt einer Batteriezelle kann durch mechanische Einwirkung genauso entstehen, wie durch den Alterungsprozess der Batterievorrichtung und insbesondere der einzelnen Batteriezellen. Bei bekannten Fahrzeugen führt dies dazu, dass eine einzige defekte Batteriezelle zum Liegenbleiben des Fahrzeugs und damit einer defekten Batterievorrichtung führt. In einem solchen Defektfall ist ein Abschleppen des Fahrzeugs durch Hilfsmittel, zum Beispiel durch einen Abschleppwagen, zwingend notwendig. Eine Fortbewegung des Fahrzeugs in einem solchen Defektfall durch den eigenen Antrieb ist nicht mehr möglich.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Mobilität eines Fahrzeugs auch bei einer defekten Batteriezelle sicherzustellen.

US2017/120770A1 offenbart eine Batterievorrichtung für ein Fahrzeug.

Die voranstehende Aufgabe wird gelöst durch eine Batterievorrichtung mit den Merkmalen des Anspruchs 1 und ein Verfahren mit den Merkmalen des Anspruchs 9. Weitere Merkmale und Details der Erfindung ergeben sich aus den Unteransprüchen, der Beschreibung und den Zeichnungen. Dabei gelten Merkmalen und Details, die im Zusammenhang mit der erfindungsgemäßen Batterievorrichtung beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Eine erfindungsgemäße Batterievorrichtung für ein Fahrzeug weist ein Haupt-Batteriesystem mit wenigstens zwei Batterieeinheiten und ein Not-Batteriesystem mit wenigstens einer Batterieeinheit auf. Das Haupt-Batteriesystem weist in jedem Fall mehr Batterieeinheiten auf, als das Not-Batteriesystem. Weiter sind das Haupt-Batteriesystem und das Not-Batteriesystem miteinander elektrisch parallel verschaltet und weisen die gleiche Nennspannung auf. Das Haupt-Batteriesystem und das Not-Batteriesystem bilden also gemeinsam einen Teil eines elektrischen Schaltkreises aus. Weiter ist das Haupt-Batteriesystem mit einem Hauptschalter ausgestattet zum Auskoppeln des Batteriesystems, insbesondere aus dem beschriebenen elektrischen Schaltkreis. Das Not-Batteriesystem ist mit einem vom Hauptschalter separaten Notschalter für ein Auskoppeln des Not-Batteriesystems aus diesem elektrischen Schaltkreis ausgestattet.

Dadurch, dass das Haupt-Batteriesystem und das Not-Batteriesystem die gleiche Nennspannung aufweisen, ist es möglich diese direkt miteinander elektrisch parallel zu verschalten. Die einzelnen Batterieeinheiten können dabei in sich geschlossene Fertigungsmodule sein, deren Anzahl je nach Einsatzzweck variiert wird. Beispielsweise kann eine Batterieeinheit durch eine PKW-Batterie ausgebildet sein. Wird ein Einsatz in einem LKW gewünscht, kann nun die notwendige größere Kapazität einfach durch parallele Verschaltung mehrerer solcher PKW-Batterien erreicht werden.

Erfindungsgemäß ist also nun eine Parallelverschaltung von zwei Batteriesystemen, nämlich dem Haupt-Batteriesystem und dem Not-Batteriesystem, in einem gemeinsamen elektrischen Schaltkreis vorgesehen. Jedes dieser beiden Teile, also das Not-Batteriesystem und das Haupt-Batteriesystem, sind mit einem eigenen Schalter als Schaltvorrichtung ausgestattet, welcher im Falle des Haupt-Batteriesystems der Hauptschalter und im Falle des Not-Batteriesystems der Notschalter ist. Dies führt zu separaten Schaltfunktionalitäten in den unterschiedlichen Einsatzfällen, wie sie nachfolgend näher erläutert werden.

Im Vergleich zu bekannten Fahrzeugen kann auch bei einem erfindungsgemäß ausgestatteten Fahrzeug mit einer entsprechenden Batterievorrichtung ein Defekt in der Batterievorrichtung auftreten. Dieser kann zum Beispiel auf einer defekten einzelnen Batteriezelle und/oder einem defekten einzelnen Batteriemodul beruhen. Sämtliche Batterieeinheiten innerhalb eines entsprechenden Batteriesystems, also im Haupt-Batteriesystem oder im Not-Batteriesystem, würden in einem solchen Defektfall nicht mehr zur Abgabe von Leistung in elektrischer Weise zur Verfügung stehen. Hier können nun zwei grundsätzliche Defektfälle voneinander unterschieden werden.

Im ersten Defektfall besteht der Defekt innerhalb des Not-Batteriesystems. Das bedeutet also, dass innerhalb der wenigstens einen Batterieeinheit des Not-Batteriesystems ein Defekt der Batteriezelle oder eines Batteriemoduls auftritt, und somit das Not-Batteriesystem nicht mehr in der Lage ist, Leistung abzugeben. Nach Erkennen eines solchen Defektes und Lokalisierung im Not-Batteriesystem kann mithilfe des Notschalters das Not-Batteriesystem aus dem elektrischen Schaltkreis ausgekoppelt werden. Mit anderen Worten steht nunmehr das Haupt-Batteriesystem zur Verfügung, um das Fahrzeug mit elektrischer Leistung zu versorgen. Dadurch, dass das Haupt-Batteriesystem jedoch größer ausgebildet ist als das Not-Batteriesystem, steht mit hoher Wahrscheinlichkeit noch genug Leistung zur Verfügung, um das Fahrzeug in eine Werkstatt oder nach Hause zu bewegen. Im Defektfall des Not-Batteriesystems ist die Mobilität des Fahrzeugs also gewährleistet.

Als zweiter Defektfall kann der Defekt auch innerhalb des Haupt-Batteriesystems vorliegen. Das bedeutet also, dass eine Batteriezelle oder ein Batteriemodul im Haupt-Batteriesystem defekt ist, wodurch das Haupt-Batteriesystem nicht mehr in der Lage ist, entsprechend elektrische Leistung an das Fahrzeug zu dessen Betrieb abzugeben. In einem solchen Fall wird nach dem Erkennen des Defekts und der Lokalisierung im Haupt-Batteriesystem der Hauptschalter das Haupt-Batteriesystem aus dem elektrischen Schaltkreis auskoppeln.

Nunmehr ist das Fahrzeug zwar nicht mehr mit dem Haupt-Batteriesystem gekoppelt, jedoch steht im Vergleich zu den bekannten Lösungen immer noch das Not-Batteriesystem funktionsfähig im elektrischen Schaltkreis zur Verfügung, um zumindest mit reduzierter Leistungsabgabe elektrische Energie für das Fahrzeug zur Verfügung zu stellen. Zwar ist das Not-Batteriesystem kleiner ausgestaltet als das Haupt-Batteriesystem, jedoch für eine sogenannte "limp home"-Funktion, also für eine Zurverfügungstellung einer Restmobilität zum Bewegen des Fahrzeugs in eine Werkstatt, nach Hause oder in eine anderweitige sichere Situation, reicht die zur Verfügung stehende Energie im Not-Batteriesystem auf jeden Fall aus.

Bei den voranstehenden Beschreibungen der beiden alternativen Defektsituationen im Haupt-Batteriesystem und im Not-Batteriesystem kann erkannt werden, dass in beiden Fällen eine Restmobilität zur Verfügung gestellt wird. Diese Restmobilität reicht also in beiden Defektsituationen aus, um dem Fahrzeug eine Heimfahrt und/oder eine Bewegung in eine sichere Position zu ermöglichen. Dies wir auch als "Limp Home" Funktion bezeichnet.

Erfindungsgemäß ist das Not-Batteriesystem kleiner ausgestaltet als das Haupt-Batteriesystem. Dies bringt neben der grundsätzlichen Sicherungsfunktion der Mobilität des Fahrzeugs entscheidende Vorteile mit sich. Dies ist insbesondere am separaten Notschalter zu erkennen, da dieser mit Bezug auf seine elektrische Auslegung, sein Gewicht, seinen Preis, aber auch seine geometrische Größe kleiner ausgelegt werden kann, wenn das Not-Batteriesystem entsprechend kleiner als das Haupt-Batteriesystem ausgelegt ist. Somit ist darauf hinzuweisen, dass ein erfindungsgemäßer Kerngedanke gerade diese asymmetrische Ausgestaltung zwischen dem Haupt-Batteriesystem und dem Not-Batteriesystem ist. Im Gegensatz zu Lösungen, welche ein Haupt-Batteriesystem einfach verdoppeln, führt eine erfindungsgemäße asymmetrische Ausgestaltung dazu, dass das Not-Batteriesystem die "limp home"-Funktionalität in kostengünstigerer Weise zur Verfügung stellen kann. Diese kostengünstigere Ausgestaltung beruht insbesondere auf der asymmetrischen Ausgestaltung, da eine geringere Größe und eine geringere Leistungsfähigkeit des Not-Batteriesystems auch mit einer geringeren Leistungsfähigkeit und damit mit geringeren Kosten und einer geringeren Größe des Notschalters und der entsprechenden Einkoppelung in den elektrischen Schaltkreis einhergehen.

Es kann Vorteile mit sich bringen, wenn bei einer erfindungsgemäßen Batterievorrichtung das Not-Batteriesystem genau eine Batterieeinheit aufweist. Mit dieser Ausgestaltung wird das Not-Batteriesystem also auf seine minimale Größe festgelegt. Somit erlaubt das Not-Batteriesystem auch nur eine minimale Restmobilität, sodass diese genau eine Batterieeinheit vorzugsweise auf eine entsprechende Restmobilität hinsichtlich zum Beispiel einer Kilometerleistung des Fahrzeugs, ausgelegt ist. Beispielsweise kann die genau eine Batterieeinheit des Not-Batteriesystems so ausgelegt sein, dass er unter bestimmten definierten Voraussetzungen eine Restmobilität von zum Beispiel 50 km Bewegungsradius für das Fahrzeug zur Verfügung stellt. Diese Restmobilität kann auch mit weiteren Einschnitten in die Mobilität des Fahrzeugs korrelieren, zum Beispiel mit einer reduzierten Beschleunigungsfähigkeit und einer reduzierten Maximalgeschwindigkeit, um mit hoher Wahrscheinlichkeit diese Restmobilität in Form der 50 km auch unter widrigen Umständen erreichen zu können. Auch ist auf diese Weise die Reduktion der Ausgestaltung des Notschalters noch weiter verbesserbar. Die Spannung in dem Not-Batteriesystem mit genau einer Batterieeinheit wie auch mit mehreren Batterieeinheiten entspricht vorzugsweise der Spannung in den Batterieeinheiten des Haupt-Batteriesystems.

Vorteile können weiter erzielt werden, wenn bei einer erfindungsgemäßen Batterievorrichtung die Batterieeinheiten des Haupt-Batteriesystems und die Batterieeinheiten des Not-Batteriesystems elektrisch identisch oder im Wesentlichen elektrisch identisch sind. Mit anderen Worten kann ein modularer Aufbau der gesamten Batterievorrichtung zur Verfügung gestellt werden. Jedes einzelne Batteriemodul ist mit einer definierten und insbesondere identischen Anzahl von identischen Batteriezellen ausgestattet. Jede Batterieeinheit ist mit einer identischen Anzahl von identischen Batteriemodulen ausgestattet. Somit können eine beliebige Anzahl von Batterieeinheiten in dem Haupt-Batteriesystem und eine entsprechende Anzahl oder auch genau eine Batterieeinheit in identischer Ausgestaltung im Not-Batteriesystem vorgesehen werden. Dies bringt große Vorteile mit sich, da insbesondere die Nennspannungen der einzelnen Batteriesysteme sich automatisch ebenfalls in identischer Weise ergeben. Eine Anpassung und das Vorsehen von Wechselrichter- oder Gleichrichterfunktionen sind auf diese Weise nicht mehr notwendig.

Vorteilhaft ist es weiter, wenn bei einer erfindungsgemäßen Batterievorrichtung das Haupt-Batteriesystem und das Not-Batteriesystem in einem gemeinsamen Batteriegehäuse angeordnet sind. Dies gilt insbesondere auch für die Anordnung der beiden Schalter, also des Notschalters und des Hauptschalters. Von außen ist die Batterievorrichtung also als kompakte Baueinheit zu erkennen. Die Batterievorrichtung kann in einem solchen gemeinsamen Batteriegehäuse kostengünstig und einfach vormontiert werden, sodass für die Endmontage im Fahrzeug eine einzige Baueinheit in Form eines gemeinsamen Batteriegehäuses zur Verfügung steht. Insbesondere sind sämtliche Schaltfunktionalitäten wie auch die komplette Kontrollintelligenz ebenfalls innerhalb dieses gemeinsamen Batteriegehäuses angeordnet.

Ein weiterer Vorteil ist erzielbar, wenn bei einer erfindungsgemäßen Batterievorrichtung der Notschalter wenigstens hinsichtlich einer der folgenden Parameter reduziert mit Bezug auf den Hauptschalter ausgebildet ist:
- elektrische Belastungsgrenze
- Kosten
- Gewicht
- elektrische Absicherung

Bei der voranstehenden Aufzählung handelt es sich um eine nicht abschließende Liste. Hier ist gut zu erkennen, dass zumindest einer, insbesondere mehrere der voranstehenden Parameter, die für die Kosten und das Gewicht und den gesamten notwendigen Aufwand für den Notschalter notwendig sind, eine Reduktion und damit eine Optimierung der Batterievorrichtung erzielt werden können. Dadurch, dass das Not-Batteriesystem entsprechend kleiner als das Haupt-Batteriesystem ausgestaltet ist, wird es erzielbar, den Notschalter ebenfalls entsprechend kleiner auszugestalten. Dies unterscheidet den erfindungsgemäßen Kerngedanken in asymmetrischer Ausgestaltung zwischen Not-Batteriesystem und Haupt-Batteriesystem deutlich von einer reinen Verdopplung eines Haupt-Batteriesystems.

Ebenfalls von Vorteil ist es, wenn bei einer erfindungsgemäßen Batterievorrichtung das Not-Batteriesystem benachbart oder im Wesentlichen benachbart zu einem gemeinsamen Kontrollmodul des Not-Batteriesystems und des Haupt-Batteriesystems angeordnet ist, insbesondere näher als das Haupt-Batteriesystem. Mit anderen Worten können zwischen dem Not-Batteriesystem und dem Kontrollmodul kürzere elektrische Leitungen und kürzere Kontrollleitungen versehen werden. Auch sind hier reduzierte Leitungsquerschnitte möglich, da aus dem Not-Batteriesystem entsprechend weniger Leistungsabgabe erfolgen muss. Diese reduzierten Leitungsquerschnitte führen darüber hinaus zu weniger Gewicht und geringeren Kosten einer erfindungsgemäßen Batterievorrichtung.

Vorteilhaft ist es darüber hinaus, wenn bei einer erfindungsgemäßen Batterievorrichtung das Haupt-Batteriesystem und das Not-Batteriesystem einen gemeinsamen Kontaktabschnitt aufweisen für einen parallel verschalteten Anschluss an einen Verbraucher. Wie bereits erläutert worden ist, sind Haupt-Batteriesystem und Not-Batteriesystem im regulären Einsatz miteinander parallel in einem elektrischen Schaltkreis verschaltet. Der gemeinsame Kontaktabschnitt erlaubt es, auch bei bestehenden elektrischen Anschlusssituationen für die Verbraucher in einem Fahrzeug eine entsprechende erfindungsgemäße Batterievorrichtung einzusetzen. Insbesondere ist dieser gemeinsame Kontaktabschnitt als Teil eines gemeinsamen Batteriegehäuses ausgebildet und/oder in ein solches gemeinsames Batteriegehäuse integriert. Dieser gemeinsame Kontaktabschnitt ist vorzugsweise als gemeinsamer Stecker ausgebildet und kann zum Beispiel dem Notschalter und dem Hauptschalter elektrisch nachgelagert angeordnet sein.

Weitere Vorteile bringt es mit sich, wenn bei einer erfindungsgemäßen Batterievorrichtung für das Haupt-Batteriesystem und das Not-Batteriesystem ein gemeinsames Kontrollmodul vorgesehen ist, wobei insbesondere wenigstens ein gemeinsames Zusatz-Kontrollmodul für das Haupt-Batteriesystem und das Not-Batteriesystem vorgesehen ist. Mit anderen Worten ist hier eine redundante Ausgestaltung vorgesehen, um auch im Defektfall des Kontrollmoduls oder des Zusatz-Kontrollmoduls weiter die Kontrolle über die Batterievorrichtung behalten zu können. Die Kontrolle mithilfe des Kontrollmoduls und/oder des Zusatz-Kontrollmoduls erlaubt ein Laden, ein Entladen, aber auch ein Balancing des Haupt-Batteriesystems und des Not-Batteriesystems.

Ebenfalls Gegenstand der vorliegenden Erfindung ist ein Verfahren für die Kontrolle einer Batterievorrichtung gemäß der vorliegenden Erfindung, aufweisend die folgenden Schritte:
- Erkennen eines Defekts in einer Batterieeinheit
- Erkennen einer Zuordnung der defekten Batterieeinheit zu dem Haupt-Batteriesystem oder dem Not-Batteriesystem
- Auskoppeln des Haupt-Batteriesystems oder des Not-Batteriesystems auf Basis der Zuordnung der defekten Batterieeinheit.

Erfindungsgemäß kann nun also ein Defekt nicht nur in einer Batterieeinheit erkannt, sondern auch dem Haupt-Batteriesystem oder dem Not-Batteriesystem zugeordnet werden. Der Teil der Batterievorrichtung, in welchem der Defekt lokalisiert und zugeordnet worden ist, wird in einem letzten Schritt aus dem elektrischen Schaltkreis in erfindungsgemäßer Weise ausgekoppelt. Damit bringt ein erfindungsgemäßes Verfahren die gleichen Vorteile mit sich, wie sie ausführlich mit Bezug auf eine erfindungsgemäße Batterievorrichtung erläutert worden sind.

Weiter von Vorteil ist es, wenn bei einem erfindungsgemäßen Verfahren bei einer Zuordnung der defekten Batterieeinheit zu dem Haupt-Batteriesystem die Leistungsabgabe des Not-Batteriesystems begrenzt wird. Somit wird es möglich, eine Mindestmobilität, zum Beispiel eine Mindestreichweite, auch dann zu erreichen, wenn das Not-Batteriesystem aufgrund seiner reduzierten Größe eine reduzierte Leistungsabgabe gewährleisten kann. So ist es beispielsweise denkbar, als Reduktion die Geschwindigkeit, die Beschleunigung, den Kühlaufwand oder die Reduktion von nicht priorisierten Verbrauchern zugrunde zu legen. Dies schützt die erfindungsgemäße Funktionalität der "limp home"-Funktion des Fahrzeugs weiter.

Ebenfalls vorteilhaft kann es sein, wenn bei einem erfindungsgemäßen Verfahren im normalen Betrieb der Batterievorrichtung das Haupt-Batteriesystem und das Not-Batteriesystem wenigstens zeitweise gemeinsam betrieben werden. Darunter ist zu verstehen, dass in einem normalen Betriebszustand sowohl das Haupt-Batteriesystem als auch das Not-Batteriesystem gemeinsam der Leistungsabgabe zur Verfügung stellen. Dies gilt auch beim Laden der Batterievorrichtung, sodass das Haupt-Batteriesystem und das Not-Batteriesystem zumindest zeitweise gemeinsam geladen werden. Bevorzugt kann hier jedoch eine Ausgestaltung vorgesehen werden, welche den Schutz der Notfunktionalität mit sich bringt. So kann eine gemeinsame Untergrenze vorgegeben werden, unter welcher das Not-Batteriesystem hinsichtlich seines Ladezustandes (state of charge - SOC) nicht fallen soll. Sobald also der gemeinsame Ladezustand von Haupt-Batteriesystem und Not-Batteriesystem während des Fahrbetriebs, also beim Entladen, diesen Zustand erreicht, wird das Not-Batteriesystem durch den Notschalter ausgekoppelt und ausschließlich das Haupt-Batteriesystem für die Abgabe von elektrischer Leistung gewährleistet. Bei einem anschließenden Ladezyklus wird zuerst das Haupt-Batteriesystem alleine auf diese definierte Untergrenze aufgeladen, sodass erst bei Erreichen eines gleichen oder im Wesentlichen gleichen Ladungszustandes zwischen Haupt-Batteriesystem und Not-Batteriesystem das Not-Batteriesystem über den Notschalter zugeschaltet und der gemeinsame Ladevorgang weitergeht. Das zumindest zeitweise gemeinsame Betreiben hinsichtlich Ladezuständen und Entladezuständen der beiden Batteriesysteme führt dazu, dass sowohl die Nutzung als auch die Alterung für beide Batteriesysteme gemeinsam zur Verfügung gestellt werden kann.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: eine Ausführungsform einer erfindungsgemäßen Batterieeinheit,
- Figur 2: eine Ausführungsform von zwei benachbarten Batterieeinheiten,
- Figur 3: eine schematische Darstellung einer erfindungsgemäßen Batterievorrichtung,
- Figur 4: eine weitere Darstellung einer erfindungsgemäßen Batterievorrichtung,
- Figur 5: eine Situation während des Entladens,
- Figur 6: eine fortgeschrittene Situation beim Entladen,
- Figur 7: eine Situation beim Beladen und
- Figur 8: eine fortgeschrittene Situation beim Beladen der Batterievorrichtung.

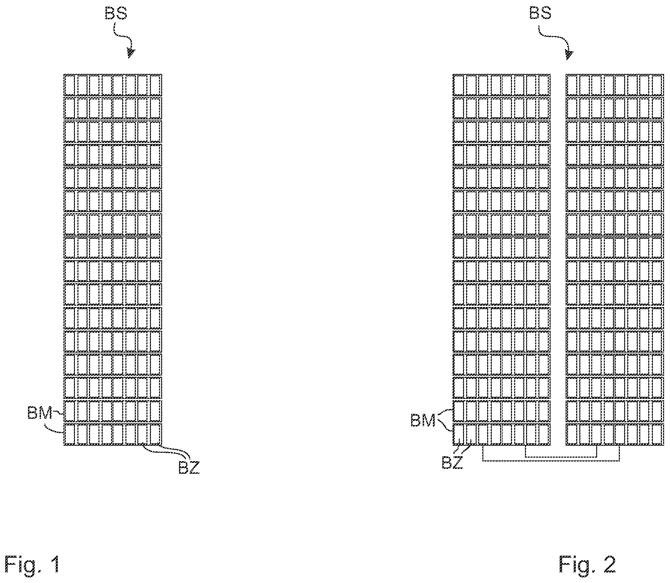

Die Figuren 1 und 2 zeigen schematisch, wie grundsätzlich eine Batterieeinheit BS aufgebaut sein kann. Dabei kann es sich um eine einzelne Batterieeinheit BS gemäß Figur 1 handeln. Hier ist eine Vielzahl von Batteriemodulen BM nebeneinander angeordnet, um die Batterieeinheit BS auszubilden. Jedes der einzelnen Batteriemodule BM ist mit einer Vielzahl von Batteriezellen BZ ausgestaltet, welche miteinander elektrisch verschaltet sind. In der Figur 2 ist eine Batterieeinheit BS dargestellt, welcher eine Verdopplung der Ausführungsform der Figur 1 darstellt. Hier ist gezeigt, wie in Serienschaltung entsprechend die Anzahl der Batteriezellen BZ und der Batteriemodule BM erhöht werden kann.

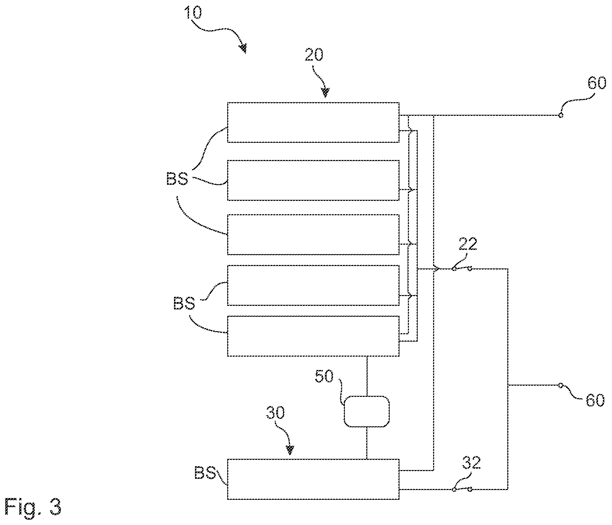

Die Figur 3 zeigt schematisch, wie eine Batterievorrichtung 10 aufgebaut sein kann. Hier ist gut zu erkennen, dass ein Haupt-Batteriesystem 20 und ein Not-Batteriesystem 30 asymmetrisch ausgebildet sind. Das Haupt-Batteriesystem 20 besteht aus fünf Batterieeinheiten BS, die parallel zueinander angeordnet sind. Das Not-Batteriesystem 30 besteht aus nur einer einzigen Batterieeinheit BS. Bevorzugt sind alle Batterieeinheiten BS, also diejenigen des Haupt-Batteriesystems 20 und dasjenige des Not-Batteriesystems 30 identisch zueinander ausgebildet. Es können nun grundsätzlich zwei Defektfälle voneinander unterschieden werden. Dabei handelt es sich zum einen um einen Defekt im Not-Batteriesystem 30, also in dieser wenigstens einen oder genau einen Batterieeinheit BS. Dies führt dazu, dass eine Wahrnehmung des Defekts und eine Lokalisierung durch das Kontrollmodul 50 erfolgt, sodass anschließend über den Notschalter 32 das Not-Batteriesystem 30 auskoppelbar ist. In einem solchen Fall steht noch genug elektrische Leistungsfähigkeit im Haupt-Batteriesystem 20 zur Verfügung, um eine Restmobilität für das Fahrzeug zu gewährleisten.

Besteht jedoch ein Defekt innerhalb des Haupt-Batteriesystems 20, also in zumindest einer der Batterieeinheiten BS des Haupt-Batteriesystems 20, so kann dies ebenfalls vom Kontrollmodul 50 erkannt und entsprechend zugeordnet werden. Nach der Zuordnung wird ein Auskoppeln aus dem elektrischen Schaltkreis durch den Hauptschalter 22 für das Haupt-Batteriesystem 20 durchgeführt. Nun steht jedoch im Vergleich zu bekannten Lösungen immer noch die elektrische Restleistungsfähigkeit in dem Not-Batteriesystem 30 zur Verfügung, um eine Restmobilität für das Fahrzeug gewährleisten zu können. In beiden Defektfällen liegt die entsprechende elektrische Leistungsfähigkeit an gemeinsamen Kontaktabschnitten 60 an.

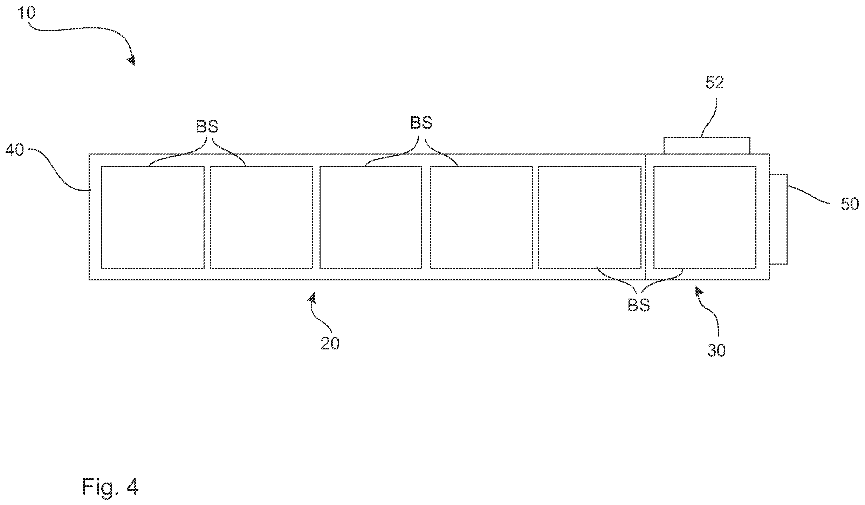

In Figur 4 ist eine weitere Ausführungsform einer erfindungsgemäßen Batterievorrichtung 10 dargestellt. Hier sind sämtliche Batterieeinheiten BS des Haupt-Batteriesystems 20 und des Not-Batteriesystems 30 in ein gemeinsames Batteriegehäuse 40 integriert. Auch ist hier gut zu erkennen, dass die Batterieeinheit BS des Not-Batteriesystems 30 ganz rechts und damit in direkter Nachbarschaft zum Kontrollmodul 50, wie auch zu einem redundanten Zusatz-Kontrollmodul 52 ausgebildet ist. Das Not-Batteriesystem 30 ist also näher am Kontrollmodul wie auch am Zusatz-Kontrollmodul 52 angeordnet, als dies für die Batterieeinheiten BS des Haupt-Batteriesystems 20 der Fall ist.

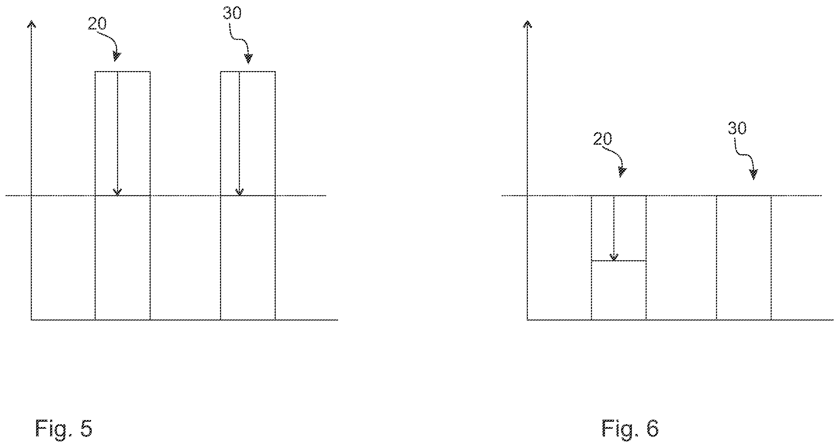

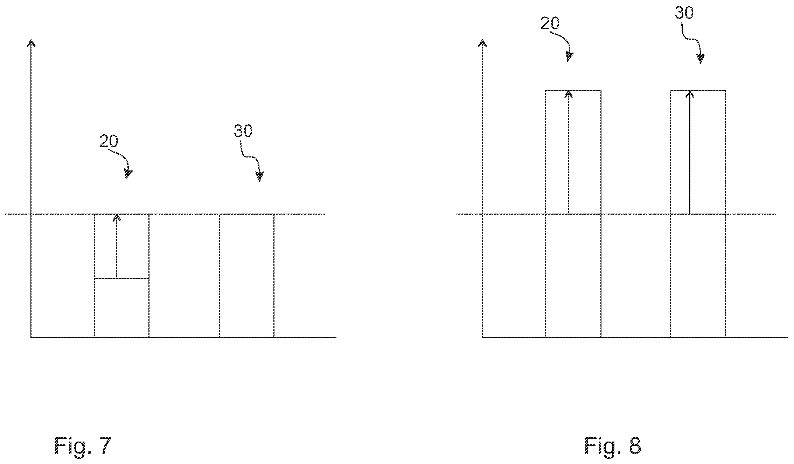

Die Figuren 5 und 6 zeigen eine Möglichkeit einer Entladesituation. Aus einem vollgeladenen Zustand von Haupt-Batteriesystem 20 und Not-Batteriesystem 30 findet ein gemeinsames Entladen und damit paralleles Entladen gemäß der Figur 5 statt. Sobald eine definierte Schwelle erreicht ist, kann auf Basis dieser Schwelle zum Sicherstellen einer Restmobilität in einem Defektfall nur noch das Haupt-Batteriesystem 20 zur Zurverfügungstellung von Antriebsleistung verwendet werden. Das Not-Batteriesystem 30 wird insbesondere durch den Notschalter 32 aus dem Schaltkreis ausgekoppelt und verbleibt daher auf diesem Restladezustand. Nach dem Entladen kann während einer Beladesituation die Ausgestaltung der Figuren 7 und 8 durchgeführt werden. So wird gemäß der Figur 7 zuerst der Ladezustand des Haupt-Batteriesystems 20 soweit aufgefüllt, bis er dem Ladezustand des Not-Batteriesystems 30 entspricht oder im Wesentlichen entspricht. Erst anschließend wird zum Beispiel über den Notschalter 32 auch das Not-Batteriesystem 30 wieder dem Ladevorgang zugeschaltet, sodass gemäß der Figur 8 ein gemeinsames Laden von Haupt-Batteriesystem 20 und Not-Batteriesystem 30 vonstattengeht.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichen

- 10: Batterievorrichtung
- 20: Haupt-Batteriesystem
- 22: Hauptschalter
- 30: Not-Batteriesystem
- 32: Notschalter
- 40: Batteriegehäuse
- 50: Kontrollmodul
- 52: Zusatz-Kontrollmodul
- 60: Kontaktabschnitt

- BS: Batteriereinheit
- BM: Batteriemodul
- BZ: Batteriezelle

## Patentansprüche

1. Batterievorrichtung (10) für ein Fahrzeug, aufweisend ein Haupt-Batteriesystem (20) mit wenigstens zwei Batterieeinheiten (BS) und ein Not-Batteriesystem (30) mit wenigstens einer Batterieeinheit (BS), wobei das Haupt-Batteriesystem (20) mehr Batterieeinheiten (BS) aufweist als das Not-Batteriesystem (30), wobei weiter das Haupt-Batteriesystem (20) und das Not-Batteriesystem (30) die gleiche Nennspannung aufweisen und miteinander elektrisch parallel verschaltet sind sowie das Haupt-Batteriesystem (20) einen Hauptschalter (22) zum Auskoppeln des Haupt-Batteriesystems (20) aufweist und das Not-Batteriesystem (30) einen vom Hauptschalter (22) separaten Notschalter (32) für ein Auskoppeln des Not-Batteriesystems (30) aufweist.

2. Batterievorrichtung (10) nach Anspruch 1, **dadurch gekennzeichnet, dass** das Not-Batteriesystem (30) genau eine Batterieeinheit (BS) aufweist.

3. Batterievorrichtung (10) nach einem der vorangegangenen Ansprüche, **dadurch gekennzeichnet, dass** die Batterieeinheiten (BS) des Haupt-Batteriesystems (20) und die Batterieeinheiten (BS) des Not-Batteriesystems (30) elektrisch identisch oder im Wesentlichen identisch sind.

4. Batterievorrichtung (10) nach einem der vorangegangenen Ansprüche, **dadurch gekennzeichnet, dass** das Haupt-Batteriesystem (20) und das Not-Batteriesystem (30) in einem gemeinsamen Batteriegehäuse (40) angeordnet sind.

5. Batterievorrichtung (10) nach einem der vorangegangenen Ansprüche, **dadurch gekennzeichnet, dass** der Notschalter (32) hinsichtlich wenigstens einer der folgenden Parameter reduziert mit Bezug auf den Hauptschalter (22) ausgebildet ist:
- Elektrische Belastungsgrenze
- Kosten
- Gewicht
- Elektrische Absicherung

6. Batterievorrichtung (10) nach einem der vorangegangenen Ansprüche, **dadurch gekennzeichnet, dass** das Not-Batteriesystem (30) benachbart oder im Wesentlichen benachbart zu einem gemeinsamen Kontrollmodul (50) des Not-Batteriesystems (30) und des Haupt-Batteriesystems (20) angeordnet ist, insbesondere näher als das Haupt-Batteriesystem (20).

7. Batterievorrichtung (10) nach einem der vorangegangenen Ansprüche, **dadurch gekennzeichnet, dass** das Haupt-Batteriesystem (20) und das Not-Batteriesystem (30) einen gemeinsamen Kontaktabschnitt (60) aufweisen für einen parallel verschalteten Anschluss an einen Verbraucher.

8. Batterievorrichtung (10) nach einem der vorangegangenen Ansprüche, **dadurch gekennzeichnet, dass** für das Haupt-Batteriesystem (20) und das Not-Batteriesystem (30) ein gemeinsames Kontrollmodul (50) vorgesehen ist, wobei insbesondere wenigstens ein gemeinsames Zusatz-Kontrollmodul (52) für das Haupt-Batteriesystem (20) und das Not-Batteriesystem (30) vorgesehen ist.

9. Verfahren für die Kontrolle einer Batterievorrichtung (10) mit den Merkmalen eines der Ansprüche 1 bis 8, aufweisend die folgenden Schritte:
- Erkennen eines Defekts in einer Batterieeinheit (BS),
- Erkennen einer Zuordnung der defekten Batterieeinheit (BS) zu dem Haupt-Batteriesystem (20) oder dem Not-Batteriesystem (30),
- Auskoppeln des Haupt-Batteriesystems (20) oder des Not-Batteriesystems (30) auf Basis der Zuordnung der defekten Batterieeinheit (BS).

10. Verfahren nach Anspruch 9, **dadurch gekennzeichnet, dass** bei einer Zuordnung der defekten Batterieeinheit (BS) zu dem Haupt-Batteriesystem (20), die Leistungsabgabe des Not-Batteriesystems (30) begrenzt wird.

11. Verfahren nach einem der Ansprüche 9 oder 10, **dadurch gekennzeichnet, dass** im normalen Betrieb der Batterievorrichtung (10) das Haupt-Batteriesystem (20) und das Not-Batteriesystem (30) wenigstens zeitweise gemeinsam betrieben werden.

## Claims

1. A battery device (10) for a vehicle, comprising a main battery system (20) having at least two battery units (BS) and an emergency battery system (30) having at least one battery unit (BS), wherein the main battery system (20) has more battery units (BS) than the emergency battery system (30), wherein, furthermore, the main battery system (20) and the emergency battery system (30) have the same nominal voltage and are electrically connected in parallel with one another, and wherein the main battery system (20) has a main switch (22) for disconnecting the main battery system (20), and the emergency battery system (30) has an emergency switch (32) separate from the main switch (22) for disconnecting the emergency battery system (30).

2. The battery device (10) of claim 1, **characterized in that** the emergency battery system (30) has exactly one battery unit (BS).

3. The battery device (10) of any one of the preceding claims, **characterized in that** the battery units (BS) of the main battery system (20) and the battery units (BS) of the emergency battery system (30) are electrically identical or substantially identical.

4. The battery device (10) of any one of the preceding claims, **characterized in that** the main battery system (20) and the emergency battery system (30) are arranged in a common battery housing (40).

5. The battery device (10) of any one of the preceding claims, **characterized in that** the emergency switch (32) has a reduced configuration relative to the main switch (22) with respect to at least one of the following parameters:
electrical load limit;
cost;
weight;
electrical protection.

6. The battery device (10) of any one of the preceding claims, **characterized in that** the emergency battery system (30) is arranged adjacent or substantially adjacent to a common control module (50) of the emergency battery system (30) and of the main battery system (20), in particular closer than the main battery system (20).

7. The battery device (10) of any one of the preceding claims, **characterized in that** the main battery system (20) and the emergency battery system (30) have a common contact section (60) for a parallel connection to an electrical load.

8. The battery device (10) according to any one of the preceding claims, **characterized in that** a common control module (50) is provided for the main battery system (20) and the emergency battery system (30), wherein in particular at least one common additional control module (52) is provided for the main battery system (20) and the emergency battery system (30).

9. A method for controlling a battery device (10) having the features of any one of claims 1 to 8, comprising the following steps:
detecting a defect in a battery unit (BS),
detecting an assignment of the defective battery unit (BS) to the main battery system (20) or the emergency battery system (30),
disconnecting the main battery system (20) or the emergency battery system (30) on the basis of the assignment of the defective battery unit (BS).

10. The method according to claim 9, **characterized in that**, upon an assignment of the defective battery unit (BS) to the main battery system (20), the power output of the emergency battery system (30) is limited.

11. The method according to any one of claims 9 or 10, **characterized in that**, during normal operation of the battery device (10), the main battery system (20) and the emergency battery system (30) are operated jointly at least temporarily.

## Revendications

1. Dispositif de batterie (10) pour un véhicule, comprenant un système de batterie principal (20) avec au moins deux unités de batterie (BS) et un système de batterie de secours (30) avec au moins une unité de batterie (BS), dans lequel le système de batterie principal (20) comprend plus d'unités de batterie (BS) que le système de batterie de secours (30), dans lequel, en outre, le système de batterie principal (20) et le système de batterie de secours (30) présentent la même tension nominale et sont connectés électriquement en parallèle entre eux, le système de batterie principal (20) comprenant un interrupteur principal (22) pour le découplage du système de batterie principal (20) et le système de batterie de secours (30) comprenant un interrupteur de secours (32) séparé de l'interrupteur principal (22) pour un découplage du système de batterie de secours (30).

2. Dispositif de batterie (10) selon la revendication 1, **caractérisé en ce que** le système de batterie de secours (30) comprend exactement une unité de batterie (BS).

3. Dispositif de batterie (10) selon l'une quelconque des revendications précédentes, **caractérisé en ce que** les unités de batterie (BS) du système de batterie principal (20) et les unités de batterie (BS) du système de batterie de secours (30) sont identiques ou sensiblement identiques sur le plan électrique.

4. Dispositif de batterie (10) selon l'une quelconque des revendications précédentes, **caractérisé en ce que** le système de batterie principal (20) et le système de batterie de secours (30) sont disposés dans un boîtier de batterie commun (40).

5. Dispositif de batterie (10) selon l'une quelconque des revendications précédentes, **caractérisé en ce que** l'interrupteur de secours (32) est dimensionné, par rapport à l'interrupteur principal (22), de manière réduite en ce qui concerne au moins l'un des paramètres suivants : limite de sollicitation électrique ; coûts ; poids ; protection électrique.

6. Dispositif de batterie (10) selon l'une quelconque des revendications précédentes, **caractérisé en ce que** le système de batterie de secours (30) est disposé adjacent ou sensiblement adjacent à un module de contrôle commun (50) du système de batterie de secours (30) et du système de batterie principal (20), en particulier plus près de ce module de contrôle commun (50) que le système de batterie principal (20).

7. Dispositif de batterie (10) selon l'une quelconque des revendications précédentes, **caractérisé en ce que** le système de batterie principal (20) et le système de batterie de secours (30) présentent une section de contact commune (60) pour un raccordement en parallèle à un consommateur.

8. Dispositif de batterie (10) selon l'une quelconque des revendications précédentes, **caractérisé en ce qu'**un module de contrôle commun (50) est prévu pour le système de batterie principal (20) et le système de batterie de secours (30), au moins un module de contrôle supplémentaire commun (52) étant en particulier prévu pour le système de batterie principal (20) et le système de batterie de secours (30).

9. Procédé de contrôle d'un dispositif de batterie (10) présentant les caractéristiques de l'une quelconque des revendications 1 à 8, comprenant les étapes suivantes : détection d'un défaut dans une unité de batterie (BS) ; détermination d'une affectation de l'unité de batterie défectueuse (BS) au système de batterie principal (20) ou au système de batterie de secours (30) ; découplage du système de batterie principal (20) ou du système de batterie de secours (30) sur la base de l'affectation de l'unité de batterie défectueuse (BS).

10. Procédé selon la revendication 9, **caractérisé en ce qu'**en cas d'affectation de l'unité de batterie défectueuse (BS) au système de batterie principal (20), la puissance délivrée par le système de batterie de secours (30) est limitée.

11. Procédé selon l'une quelconque des revendications 9 ou 10, **caractérisé en ce qu'**en fonctionnement normal du dispositif de batterie (10), le système de batterie principal (20) et le système de batterie de secours (30) sont exploités conjointement au moins temporairement.
